# EUROPÄISCHE PATENTSCHRIFT

(11) **EP 3 516 363 B1**
(45) Veröffentlichungstag und Bekanntmachung des Hinweises auf die Patenterteilung: **26.04.2023**
(21) Anmeldenummer: 17786860.1
(22) Anmeldetag: 05.10.2017
(51) Int. Cl.: G01M 11/06

(54) **SCHEINWERFEREINSTELLPRÜFGERÄT, SCHEINWERFEREINSTELLPRÜFPLATZ, SCHEINWERFEREINSTELLGERÄT UND VERFAHREN ZUM PRÜFEN EINER SCHEINWERFEREINSTELLUNG**
HEADLIGHT SETTING TEST DEVICE, HEADLIGHT SETTING TEST STATION, HEADLIGHT SETTING DEVICE AND METHOD FOR TESTING A HEADLIGHT SETTING
APPAREIL DE VÉRIFICATION DE RÉGLAGE DE PHARES, POSTE DE VÉRIFICATION DE RÉGLAGE DE PHARES, APPAREIL DE RÉGLAGE DE PHARES ET PROCÉDÉ PERMETTANT DE VÉRIFIER UN RÉGLAGE DE PHARES

(30) Priorität: 14.10.2016 DE 102016119633
(43) Veröffentlichungstag der Anmeldung: 31.07.2019
(73) Patentinhaber: Sherpa Autodiagnostik GmbH, 84453 Mühldorf (DE)
(72) Erfinder: RISCHKE, Manfred, 87730 Bad Grönenbach (DE)
(74) Vertreter: Manitz Finsterwald Patent- und Rechtsanwaltspartnerschaft mbB
(86) Internationale Anmeldenummer: PCT/EP2017/075350
(87) Internationale Veröffentlichungsnummer: WO 2018/069143

(56) Entgegenhaltungen:
- DE-A1-102016 001 186
- GB-A- 1 360 619
- US-A- 4 973 155
- US-A1- 2012 224 171

## Beschreibung

Die vorliegende Erfindung betrifft ein Scheinwerfereinstellprüfgerät, einen Markierungen tragenden Scheinwerfereinstellprüfplatz, eine Scheinwerfereinstellgerät, sowie ein Verfahren zum Prüfen der Einstellung von Scheinwerfer eines Fahrzeugs.

Scheinwerfereinstellprüfgeräte mit einer ein Abbild des geprüften Scheinwerfers auf einem Monitor richtenden Linse, üblicherweise einer Fresnellinse, sind für sich bekannt. Der Monitor besteht häufig aus einem Schirm oder einer Platte, die eine Markierung trägt und innerhalb eines beweglichen Kastens untergebracht ist. Der Schirm bzw. die Platte ist von der Prüfperson durch ein Fenster des Kastens sichtbar. Der Kasten ist häufig seitlich an einer Säule montiert, die auf einen Grundrahmen mit Rädern verfahrbar ist. Der Kasten ist an der Säule mittels eine Halterung befestigt, die es ermöglicht die Winkelposition des Kastens innerhalb einer vertikalen Ebene zu verändern. Das Scheinwerfereinstellprüfgerät wird vor einem zu prüfenden Scheinwerfer gestellt und der Kasten in der Höhe justiert, damit es in waagerechter Ausrichtung mit dem jeweils zu prüfenden Scheinwerfer ausgerichtet ist. Die waagerechte Position des Scheinwerfereinstellprüfgeräts wird mit einer am Scheinwerfereinstellprüfgerät vorgesehenen Libelle geprüft. Die Ausrichtung des Kastens mit dem jeweils geprüften Scheinwerfer sollte so erfolgen, dass die Mitte der Linse, d.h. die mittlere Achse des Kastens mit der Mitte des Scheinwerfers ausgerichtet ist. Diese Ausrichtung wird durch die Prüfperson optisch geschätzt, häufig mit Hilfe einer mittleren Spitze an der vorderen Seite der Linse.

Die meisten Scheinwerfer tragen eine Kennziffer, die mit den optischen Eigenschaften des Scheinwerfers zusammenhängt. Diese Kennziffer wird üblicherweise an einem hinter dem Kasten positionierten Handrad eingestellt und führt dazu, dass der die Markierung tragende Schirm bzw. die entsprechende Platte in seiner bzw. ihrer Höhe als Anpassung an den Scheinwerfer mittels einer entsprechenden Mechanik eingestellt wird.

Der Benutzer hat jetzt die Möglichkeit ein von der Linse auf dem durch den Schirm oder die Platte gebildeten Monitor erzeugtes Abbild der vom Scheinwerfer ausgehenden Lichtkeule zu betrachten und die Position des Abbildes in Bezug auf die Markierung zu prüfen. Stimmt die Ausrichtung des Abbildes mit der Markierung überein, wird angenommen, dass die Einstellung des Scheinwerfers stimmt. Wenn die Ausrichtung nicht stimmt, so wird die Ausrichtung des Scheinwerfers so lange geändert bis die Ausrichtung stimmt, der Scheinwerfer gilt dann als eingestellt. Bei Kraftfahrzeugen mit zwei Hauptscheinwerfern wird dann die Prüfung für den zweiten Hauptscheinwerfer durchgeführt.

Mit einem Hauptscheinwerfer wird sowohl das Abbild für das Fernlicht als auch für das Abblendlicht geprüft. Der Ausdruck Scheinwerfer umfasst allerdings nicht nur Hauptscheinwerfer mit Fernlicht und Abblendlicht sondern auch Nebelleuchten und Zusatzleuchten falls solche vorgesehen sind. Alle Leuchten dieser Art, die auf einem Fahrzeug montiert sind, müssen geprüft werden, damit sie den Gegenverkehr nicht blenden und um sicherzustellen, dass sie vorschriftsmäßig funktionieren und eine Straße ausreichend ausleuchten.

Im Rahmen einer angestrebten Verbesserung der Einstellprüfung der Scheinwerfer ist eine Prüflinie zur Scheinwerfereinstellung bei der Hauptuntersuchung herausgegeben worden, die strenge Anforderungen an die Beschaffenheit des Scheinwerfereinstellprüfplatzes stellt, insbesondere auf die Ebenheit des vorgesehenen Scheinwerfereinstellprüfplatzes, die schwer zu erfüllen sind. Zum Beispiel darf die Unebenheit des Scheinwerfereinstellprüfplatzes nicht mehr als 1 mm/m überschreiten. Solche Toleranzen sind mit einem Estrichboden oder einem gefliesten Boden nur mit größerem Aufwand zu erfüllen. Aufgrund dieser Anforderungen werden derzeit Stahlplatten angeboten, die die vorgesehene Fläche des Scheinwerfereinstellprüfplatzes abdecken und die justierbar sind. Solche Platten führen aber zu Kosten von mehreren tausend Euro und sind für kleinere Werkstätten unerschwinglich.

Darüber hinaus führt die Anwendung einer solchen Stahlplatte zu vertikalen Stufen am Boden der Werkstatt, die Stolpersteine darstellen und eine Reinigung der Werkstatt erschweren. Das versenken der Stahlplatte im Boden - damit sie zumindest im Wesentlichen flächenbündig mit dem Boden ist - würde zu noch höheren Kosten führen und es würden ohnehin Stolperkanten existieren, da man ja voraussetzt dass der Boden der Werkstatt im Regelfall nicht eben ist, was die Notwendigkeit für die Anwendung solcher Stahlplatten begründet.

Es besteht die Möglichkeit die Scheinwerfereinstellprüfung auf einer Fahrschienen aufweisenden Hebebühne durchzuführen, die den Scheinwerfereinstellprüfplatz darstellt, jedoch erfüllen viele Hebebühnen die strikten Anforderungen an Ebenheit nicht und eine Einstellung ist häufig nicht oder nicht nachträglich vorgesehen.

Aufgabe der vorliegenden Erfindung ist es ein Scheinwerfereinstellprüfgerät bzw. ein Einstellverfahren vorzusehen, dass auf einem die geforderte Ebenheit nicht aufweisenden Scheinwerfereinstellprüfplatz verwendet werden kann und dennoch eine zuverlässige Einstellprüfung ermöglicht, die mit den vorgesehenen Richtlinien konform ist und zwar ohne einen unzumutbaren Aufwand darzustellen und ohne eine aufwendige Einstellplatte verwenden zu müssen, wobei das Scheinwerfereinstellgerät und der damit verwendete Scheinwerfereinstellprüfplatz auch für kleinere Werkstäten erschwinglich sein soll, damit auch in diesen in Zukunft Hauptuntersuchungen an Fahrzeugen durchgeführt werden können. Ferner soll ein Scheinwerfereinstellprüfplatz vorgesehen werden, der für die Anwendung mit einem solchen Scheinwerfereinstellprüfgerät geeignet ist.

Zur Lösung dieser Aufgabe wird ein Scheinwerfereinstellprüfgerät zur Anwendung auf einem Scheinwerfereinstellprüfplatzes nach Anspruch 1 vorgesehen, dh. ein Scheinwerfereinstellprüfgerät mit einer ein Abbild des geprüften Scheinwerfers auf einem Monitor richtenden Linse, mit einem Datenspeicher, der Daten umfasst, die der Topographie des jeweiligen Scheinwerfereinstellprüfplatzes, d.h. der tatsächlichen X, Y, Z Position des Bodens des Scheinwerfereinstellprüfplatzes entsprechen, und daher den Höhenunterschied (h) zwischen der Aufstandsfläche eines auf der Seite des jeweils geprüftem Scheinwerfers angeordneten Hinterrades und der Aufstandsfläche des entsprechenden Vorderrades speichert und mit einer den jeweiligen Höhenunterschied (h) berücksichtigende Korrekturmöglichkeit für die Position des Abbildes auf dem Monitor, wodurch die Auswirkung des Höhenunterschieds (h) auf die Beurteilung der jeweiligen Einstellung des jeweiligen Scheinwerfers kompensierbar ist.

Es ist nämlich erfindungsgemäß erkannt worden, dass es gar nicht notwendig ist, strenge Anforderungen auf die Ebenheit des Scheinwerfereinstellprüfplatzes zu stellen, solange der Höhenunterschied zwischen den Positionen der dem jeweils gemessenen Scheinwerfer zugeordneten Aufstandsflächen des Hinterrades und des Vorderrades sowie der Abstand zwischen diesen Aufstandsflächen bekannt sind. Gemessen wird vorzugsweise zu der Mitte der jeweiligen Aufstandsflächen

Der genannte Höhenunterschied führt abhängig von dem Abstand zwischen den jeweiligen Aufstandsflächen zu einer winkelmäßigen Abweichung der Position des jeweils gemessenen Scheinwerfers, wobei dieser Winkel einen Wert darstellt, der dem Höhenunterschied für das jeweilige Fahrzeug entspricht (da der Abstand zwischen den Aufstandsflächen ein Fahrzeug spezifischen Parameter darstellt). Diese winkelmäßige Abweichung des Scheinwerfers gegenüber dem Waagerechten führt zu einer Verschiebung des Abbilds auf dem Monitor. Gemäß der Erfindung kann diese Verschiebung derart kompensiert werden, dass die Unebenheit des Scheinwerfereinstellprüfplatzes für das jeweils geprüfte Fahrzeug die Prüfung nicht mehr verfälscht.

An dieser Stelle soll kurz auf die DE 10201600186 verwiesen werden. Diese Schrift befasst sich mit der Scheinwerfereinstellung auf einem nicht ebenen Werkstattboden. Der dortige Vorschlag ist jedoch sehr kompliziert und macht es erforderlich Messplatten an den Rädern anzubringen und eine getrennte Messung für jedes geprüftes Fahrzeug durchzuführen.

Ferner soll auf die Schrift US 2012/1224171 A verwiesen werden, diels sich mit der Einstellung von Scheinwerfer auf geneigten Prüfflächen befasst. Hier wird die Neigung der Prüffläche mit einem Messgerät zum Beispiel ein "Hoppy Model G2" erfasst, der die Neigung der Bodenfläche zwischen den Reifen ermittelt. Konkret wird ein Sender neben dem Vorderrad des Fahrzeugs und eine Zieleinrichtung neben dem Hinterrad des Fahrzeugs angeordnet. Der gemessene Neigungswert kann gespeichert und für zukünftige Messungen verwendet werden. Dieses System funktioniert jedoch nur wenn die Neigung der Bodenfläche konstant ist. Falls Die Bodenfläche nicht geneigt, sondern uneben ist, wäre die Messung der Neigung nur dann sinnvoll wenn alle geprüfte Fahrzeuge den gleichen Radstand aufweisen und genau an der gleichen Stelle stehen. Da jedoch verschiedene Fahrzeuge verschiede Radstände aufweisen, muss seine komplexe Messung der Neigung getrennt für jedes Fahrzeug durchgeführt werden. Ferner, da die Messung neben den vorderen und hinteren Rädern erfolgt, wird eine Unebenheit in der Mitte der Aufstandsflächen nicht gebührend berücksichtigt.

Es soll auch auf die GB1 360 619 verwiesen werden. Diese Schrift befasst sich mit einem Prüfgerät zur Prüfung der Einstellung von Scheinwerfer auf einer unebenen Bodenfläche. Zu diesem Zweck wird das Prüfgerät zunächst mit der Mitte des Scheinwerfers ausgerichtet. Bei einer unebenen Bodenfläche wird das Prüfgerät mittels einer Libelle horizontal neben dem Vorderrad des Fahrzeugs angeordnet und es wird ein auf einem Ständer montierter Spiegel mit einem Zielkreuz mit einem Mittelpunkt der Linse des Prüfgeräts unmittelbar neben der Linse ausgerichtet. Der Spiegel mit dem Stand wird dann zu einer Position benachbart zum Hinterrad versetzt und ein Spiegel im Prüfgerät gedreht, bis eine auf der Beobachtungsschirm des Prüfgeräts vorgesehener Markierungslinie mit der Mitte des Zielkreuzes ausgerichtet ist. Auf dieser Weise wird die Position der Markierungslinie am Beobachtungsschirm so eingestellt, dass sie für die durch die Neigung der Bodenfläche verursachte Neigung des Fahrzeugs kompensiert ist, wodurch die Neigung des Fahrzeugs die Einstellung des Scheinwerfers nicht beeinträchtigen kann. Der Scheinwerfer kann dann eingestellt werden, die Neigung des Spiegels im Prüfgerät kompensiert das Prüfgerät für die Unebenheit der Bodenfläche. Dieses System hat die gleichen Nachteile wie die oben erwähnte US 2012/1224171 A, d.h. es erfordert auch eine getrennte Messung für jedes Fahrzeug mit unterschiedlichem Radstand und kann auch nicht eine Unebenheit in der Mitte der Aufstandsflächen gebührend berücksichtigen.

Ferner wird auf die US 4,975,155 verwiesen, die die Scheinwerfer Einstellprüfung in einer horizontalen Ebene einer Arbeitsstation einer Fahrzeugproduktionslinie vornimmt, die einer ebene Prüffläche gleichzusetzen ist. Die winkelmäßige Abweichung der Position des Fahrzeugs in einer horizontalen Ebene wird darauf zurückgeführt, dass eine Lenkwinkel Prüfung in der gleichen Prüfstation durchgeführt wird, wodurch kleine solche Abweichungen entstehen können Die Korrektur einer Neigung in einer vertikalen Ebene ist auch erwähnt, ohne jedoch anzugeben wie diese Neigung entsteht. Die Scheinwerfer Einstellprüfung und die Ermittlung der Abweichungen in der horizontalen Ebene und in der vertikalen Ebene wird für jedes Fahrzeug erneut durchgeführt. Der Scheinwerfereinstellprüfplatz kann für beliebige Fahrzeuge, wie z.B. Motorräder, PKWs und LKWs in beliebiger Kombination, je nachdem welche Art von Fahrzeuge geprüft werden sollen, ausgelegt werden.

Da das erfindungsgemäß ausgelegte Scheinwerfereinstellprüfgerät relativ einfach zu realisieren ist und lediglich mit einem entsprechend ausgelegten Scheinwerfereinstellprüfplatz betrieben werden muss, bei dem keine besondere Anforderungen in Bezug auf die Ebenheit des Prüfplatzes gestellt werden müssen, kann die erfindungsgemäße Lösung zu einem erschwinglichen Preis angeboten werden, so dass auch kleinere Werkstätten diese einsetzen können, und zwar ohne dass irgendwelche Stolperkanten entstehen. Es kann eine bereits vorhandene Fläche in einer Werkstatt für die Prüfung ausgelegt und markiert werden, ohne dass irgendwelche bautechnischen Maßnahmen erforderlich sind. Dennoch erfüllt die erfindungsgemäße Lösung bei genauer Prüfung die vorgesehene Richtlinie.

Es bestehen verschieden Möglichkeiten den Monitor erfindungsgemäß auszulegen. Dieser kann eine Pixelaufzeichnende Digitalkamera, insbesondere eine CMOS-Kamera, eine CCD-Kamera oder eine andere Pixel des Abbildes aufnehmende elektronische Aufzeichnungseinheit sein.

Die Anwendung einer Digitalkamera in einem Einstellprüfgerät ist zwar für sich bekannt, bei der bekannten Lösung wird die Digitalkamera aber dazu eingesetzt, die Verteilung der Lichtintensität auf dem Monitor zu erfassen, ohne dass störende Blaulichtanteile die Auswertung stören. Die eingesetzte Digitalkamera dient aber nicht der Kompensation von Unebenheiten des Scheinwerfereinstellplatzes wie erfindungsgemäß vorgesehen ist

Eine Möglichkeit der erfindungsgemäßen Kompensation liegt darin den Pixeln der Digitalkamera eine Referenzmarkierung zuzuordnen, deren Position entsprechend dem jeweiligen im Datenspeicher gespeicherten Höhenunterschied bzw. Wert kompensierbar, insbesondere zumindest vertikal verschiebbar, ist. Um dies genauer zu erklären, kann man zum Beispiel bei einer zwölf Megapixel Digitalkamera, davon ausgehen dass die Lichtpixel erfassenden Sensoren in 4000 Spalten und in dreitausend Reihen angeordnet sind. Unterstellen wir zunächst, dass eine Referenzmarkierung aus einer waagerechten Linie durch die Mitte der Bildebene der Digitalkamera verläuft, d.h. von x=0, y= 1500 bis x=4000, y=1500 erstreckt, und dann gelten würde wenn, das Fahrzeug auf einem 100% ebenen Boden stehen würde. Wenn aber aufgrund der jeweils herrschenden Höhenunterschiede und der entsprechenden winkelmäßigen Verschiebung des Scheinwerfers die Referenzmarkierung beispielsweise in y Richtung um 100 Pixel nach unten verschoben wird, dann wird als Referenzmarkierung die Reihe von Pixeln die von x=0, y=1400 bis x=4000, y=1400 erstreckt, gewählt.

Mit anderen Wörtern wird die Referenzmarkierung elektronisch auf die Photoelemente der Digitalkamera zur Kompensation des jeweils geltenden Höhenunterschieds verschoben. Dies ist erfindungsgemäß die bevorzugte Lösung, da eine solche Kompensation preisgünstig realisiert werden kann.

Eine solche Kompensation ist allerdings nicht zwingend erforderlich, stattdessen könnte der die Markierung tragende Monitor entsprechend dem jeweiligen im Datenspeicher gespeicherten Höhenunterschied bzw. Wert vertikal verschiebbar und/oder um eine Horizontalachse neigbar sein, wodurch die Position des die Markierung tragenden Monitors entsprechend dem jeweiligen Höhenunterschied bzw. Wert bewegbar ist und das Prüfergebnis die Einstellung des Scheinwerfers nicht verfälscht. Solche Bewegungen des Monitors können mit Hilfe von preisgünstig erhältlichen Stellmotoren bzw. Schrittmotoren realisiert werden. Wenn die erwähnte Kompensation der Bodenunebenheit mittels einer Schwenkung des die Markierung tragenden Monitors um eine horizontale Achse realisiert werden soll, muss die Achse vor oder hinter dem Monitor vorgesehen werden, da nur so eine körperliche Bewegung des Monitors in der Höhe realisiert werden kann.

Der verwendete Monitor muss nicht unbedingt eine Digitalkamera sein, es könnte auch eine herkömmliche reflektierende Fläche sein.

Auf jedem Fall kann der Monitor, egal ob Digitalkamera oder reflektierende Fläche eine Referenzmarkierung tragen, und entsprechend dem jeweiligen im Datenspeicher gespeicherten Höhenunterschied bzw. Wert vertikal verschiebbar und/oder um eine Horizontalachse neigbar sein, wodurch die Position der Referenzmarkierung entsprechend dem jeweiligen Höhenunterschied bzw. Wert bewegbar ist und das Prüfergebnis die Einstellung des Scheinwerfers nicht verfälscht.

Eine andere Möglichkeit bestünde darin die Markierung auf den Schirm bzw. die Platte zu projetzieren oder zu erzeugen und den Projektor bzw. den Erzeuger entsprechend der erwünschten Kompensation zu verstellen.

Besonders bevorzugt ist es wenn das erfindungsgemäße Scheinwerfereinstellprüfgerät einen Datenspeicher aufweist, der Daten umfasst, die der Topographie des jeweiligen Scheinwerfereinstellprüfplatzes entsprechen. Erfindungsgemäß wird im Regelfall davon ausgegangen, dass die Topographie des für die Einstellprüfung bestimmten Prüfplatzes von Zeit zu Zeit, zum Beispiel jedes zweite Jahr vermessen wird und die entsprechende Messwerte positionsabhängig im Datenspeicher abgelegt werden. Die Anzahl und Verteilung der Messpunkte kann nach Belieben gewählt werden und die Abspeicherung kann derart erfolgen, dass nur Messpunkte die von einer Ebene abweichen gespeichert werden. Die Anzahl der Messpunkte bzw. deren Verteilung muss nicht unbedingt sehr hoch sein.

Die gespeicherten Daten umfassen vorzugsweise Tabellenwerte, die dem jeweiligen Höhenunterschied zwischen möglichen Aufstandsflächen eines Hinterrads und möglichen Aufstandsflächen eines Vorderrades auf dem Scheinwerfereinstellprüfplatzes entsprechen.

Es wird zunächst unterstellt, dass die übliche Vorgehensweise bei einer Scheinwerfereinstellprüfung darin besteht, das zu prüfende Fahrzeug auf den dafür vorgesehene Scheinwerfereinstellprüfplatz zu fahren, bis die Aufstandsflächen der Vorderräder an einer bestimmten vorgegebener Position in Längsrichtung des Scheinwerfereinstellprüfplatzes erreichen. Dies ist deshalb bevorzugt, da das Scheinwerfereinstellprüfgerät normalerweise nur in einem vorgesehenen definierten und besonders markierten Bereich des Scheinwerfereinstellprüfplatzes links und rechts der mittleren Längsachse des Scheinwerfereinstellprüfplatzes verschiebbar angeordnet ist, d.h. einen vorzugsweise festen Abstand von den Scheinwerfern aufweist, damit eine ungewollte Verfälschung des Messwerts durch Abstandsänderungen vermieden werden kann.

Es kann durch die Betriebsperson relativ leicht erkannt werden, ob die Aufstandsflächen der Vorderräder an den dafür vorgesehenen Position stehen. Zum Beispiel kann die Mitte der Aufstandsfläche eines Vorderrades mit dem Auge der Betriebsperson geschätzt und mit einer am Boden vorgesehenen Markierung ausgerichtet werden. Diese feste Position dient dann als Nullpunkt für die Messung der Topographie des Scheinwerfereinstellprüfplatzes.

Verschiedene Fahrzeuge weisen verschieden Radstände auf, sodass auch für vergleichsweise kurze Fahrzeuge die Aufstandsflächen der Hinterräder immer einen Mindestabstand von den Aufstandsflächen der Vorderräder aufweisen, so dass es nicht notwendig ist, Höhenunterschiede im Bereich dieses Mindestabstands zu messen. Für PKWs gibt es nur einen begrenzten maximalen Radabstand, so dass Höhenunterschiede nur in Intervallen zwischen dem Mindestabstand und einem maximal vorgesehenen Abstand gemessen werden müssen.

Die Anzahl der Messpunkte kann nach Belieben gewählt werden, eine große Anzahl von Messpunkten, zum Beispiel ein Messpunkt für jeden Zentimeter Abstand, ist aber voraussichtlich übertrieben, zumal die Aufstandsfläche eines Reifens sich über mindestens etwa 15cm erstreckt und die Verformung des Reifens in der Aufstandsfläche eine gleichmäßigende Wirkung auf die lokale Unebenheit bewirkt.

Bei mehrspurigen Fahrzeugen wie PKWs gibt es auch Mindestspurbreiten, die berücksichtigt werden müssen. Messpunkte, die im Bereich dieser Mindestspurbreite fallen, sind ebenfalls nicht erforderlich. Auch gibt es maximale Spurbreiten die zu beachten sind. Messpunkte, die außerhalb der maximal zu erwartenden Spurbreite liegen, sind ebenfalls nicht erforderlich.

Besonders günstig und erfindungsgemäß bevorzugt, ist es wenn auf dem Scheinwerfereinstellprüfplatz Markierungen vorgesehen sind, deren Positionsangaben den Tabellenwerten zugeordnet sind. Es kann sich bei diesen Markierungen, um ein auf dem Boden fixiertes oder aufgeklebtes oder aufgedrucktes Maßband oder eine Meterskala handeln, wobei die Betriebsperson dann lediglich die Mitte der Aufstandsfläche des jeweiligen Hinterrades als Angabe des jeweiligen Radstandes abliest und diesen Wert dann in das Scheinwerfereinstellprüfgerät eingeben muss, um den für diesen Radstand zugeordneten Höhenunterschied oder einen diesem entsprechenden Wert - wie eine Winkelabweichung - aus dem Datenspeicher herauszulesen bzw. bei der Kompensation zu berücksichtigen.

Es ist streng genommen auch nicht nötig, dass die Aufstandsfläche des Vorderrades an einer fest vorgegebener Position gebracht wird, denn es können auch mehrere Messpunkte im Bereich der gedachten Position des Vorderrades vorgesehen werden und der Höhenunterschied bzw. ein diesem entsprechenden Wert aus der jeweils angenommenen Position der Aufstandsfläche des Vorderrades und der Aufstandsfläche des Hinterrades bei der Kompensation berücksichtigt werden.

Es ist auch nicht zwingend erforderlich, dass die Aufstandsfläche des Vorderrades einen vorgegebenen Abstand vom Scheinwerfereinstellprüfgerät aufweist, da bei einer festen Positionierung des Scheinwerfereinstellprüfgeräts in Längsrichtung des Scheinwerfereinstellprüfplatzes und bei bekannter Position der Aufstandsfläche des Vorderrades, der von der Bodenmarkierung abgelesen werden, die erfindungsgemäße Kompensation ohnehin realisiert werden kann.

Es ist auch nicht zwingend erforderlich, dass die Aufstandsfläche des einen Vorderrades auf der einen Seite eines mehrspurigen Fahrzeugs auf der gleichen Höhe liegt, wie die Aufstandsfläche des anderen Vorderrades auf der anderen Seite des mehrspurigen Fahrzeugs. Mittels der Erfindung kann die Topographie des Scheinwerfereinstellprüfplatzes nämlich unabhängig von dessen Ebenheit kompensiert werden. Im Regelfall reicht es aus jede Seite des Fahrzeuges für sich zu betrachten. Sollte aufgrund eines ausgeprägten Höhenunterschieds zwischen den Aufstandsflächen der beiden Vorderräder eine Schräglage des Fahrzeuges entstehen, die zu einer bedenklichen Fehleinstellung der Scheinwerfer führen könnte, so kann dies auch kompensiert werden.

Das Scheinwerfereinstellprüfgerät umfasst üblicherweise eine manuelle Eingabemöglichkeit für die jeweiligen Positionsangaben entsprechend der Position zumindest des Hinterrades des geprüften Fahrzeugs bzw. den Positionen des Vorderrades und des Hinterrades. Eine manuelle Eingabe ist recht einfach zu realisieren und zwingt die Betriebsperson mit zu denken. Es wäre allerdings auch möglich die jeweiligen Positionen optisch oder elektromagnetisch zu erfassen und für die Kompensation zu berücksichtigen.

Die Topographie des vorgesehenen Scheinwerfereinstellprüfplatzes kann durch eine Abtasteinrichtung erfasst werden, die den Scheinwerfereinstellplatz abtastet. Es kann sich bei der Abtasteinrichtung zumindest um einen Laser, ein Ultraschallmessgerät, ein Radarmessgerät oder ein anderes Koordinatenmessgerät handeln.

Wie oben angedeutet wird der erfindungsgemäß vorgesehene Scheinwerfereinstellplatz vorzugsweise mit Markierungen vorgesehen, die den möglichen Aufstandsflächen eines Hinterrads und möglichen Aufstandsflächen eines Vorderrades auf dem Scheinwerfereinstellprüfplatzes markieren, deren Positionsangaben vorzugsweise Tabellenwerten der Höhenunterschiede zwischen den möglichen Aufstandsflächen eines Hinterrads und möglichen Aufstandsflächen eines Vorderrades zuordenbar sind.

Die Erfindung umfasst ferner ein Scheinwerfereinstellgerät. Wenn mittels einer Digitalkamera die jeweils geltende Einstellung eines Scheinwerfers elektronisch erkannt wird, kann eine Schnittstelle vorgesehen werden, mittels derer Daten zwischen dem Scheinwerfereinstellprüfgerät und einem Scheinwerfer austauschbar sind, um anhand einer gemessenen Abweichung einer Scheinwerfereinstellung von einer Solleinstellung, die Einstellung, vorzugsweise automatisch, zu korrigieren. Moderne Fahrzeuge werden häufig mit elektronisch verstellbaren Scheinwerfern ausgestattet, sodass eine Rückkopplung zum Scheinwerfereinstellprüfgerät kostengünstig hergestellt werden kann. Ferner können hierbei Eingabefehler vermieden werden, um sicherzustellen, dass die Scheinwerfereinstellung anhand der Resultate der Scheinwerfereinstellprüfung korrekt durchgeführt wird.

Besondere Verfahren zum Prüfen einer Scheinwerfereinstellung sind den Ansprüchen 13 bis 16 zu entnehmen.

Die Erfindung wird nachfolgen naher erläutert anhand von Ausführungsbeispielen und unter Bezugnahme auf die Zeichnung in der zeigen:
- Fig. 1: eine schematische Draufsicht auf ein erfindungsgemäß markierten Scheinwerfereinstellprüfplatz,
- Fig. 2: eine Seitenansicht eines auf dem Scheinwerfereinstellprüfplatz stehenden Fahrzeugs, bei der das Scheinwerfereinstellprüfgerät auf Rollen bewegbar ist
- Fig. 3: eine Darstellung entsprechend der Fig. 2, bei der das Scheinwerfereinstellprüfgerät alternativ auf Schienen bewegbar ist,
- Fig. 4A bis 4C: Darstellungen des zu erwartenden Abbildes der Lichtkeule eines gängigen Scheinwerfers im Scheinwerfereinstellprüfgerät, wobei die Fig.4A das Abbild für das Fernlicht und Fig. 4B das Abbild für das Abblendlicht zeigt, während Fig. 4C ein typisches Abbild der Lichtkeule eines Nebellichtes darstellt.
- Fig. 5A bis 5C: Darstellungen entsprechend den Fig. 4A bis 4C jedoch für den Fall, dass das hintere Rad auf der geprüften Seite tiefer liegt als das vordere Rad auf der geprüften Seite,
- Fig. 6A bis 6C: Darstellungen entsprechend den Fig. 4A bis 4C jedoch für den Fall, dass das hintere Rad auf der geprüften Seite höher liegt als das vordere Rad auf der geprüften Seite,
- Fig. 7: eine schematische Darstellung diverser Komponenten eines erfindungsgemäßen Scheinwerfereinstellprüfgeräts mit CMOS-Kamera, Eingabetastatur, Datenspeicher, Bildschirm und Netzteil,
- Fig. 8: eine schematische Darstellung weitere Komponenten eines erfindungsgemäßen Scheinwerfereinstellprüfgeräts und
- Fig. 9: eine schematische Darstellung ähnlich der Fig. 2 oder 3, mit einer zusätzlichen Rückkoppelung zu einer Scheinwerfereinstellvorrichtung des Fahrzeuges.

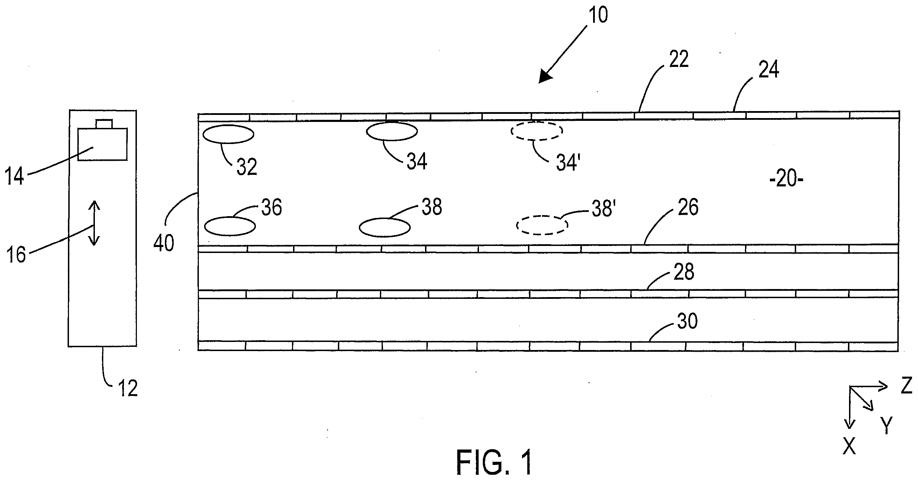

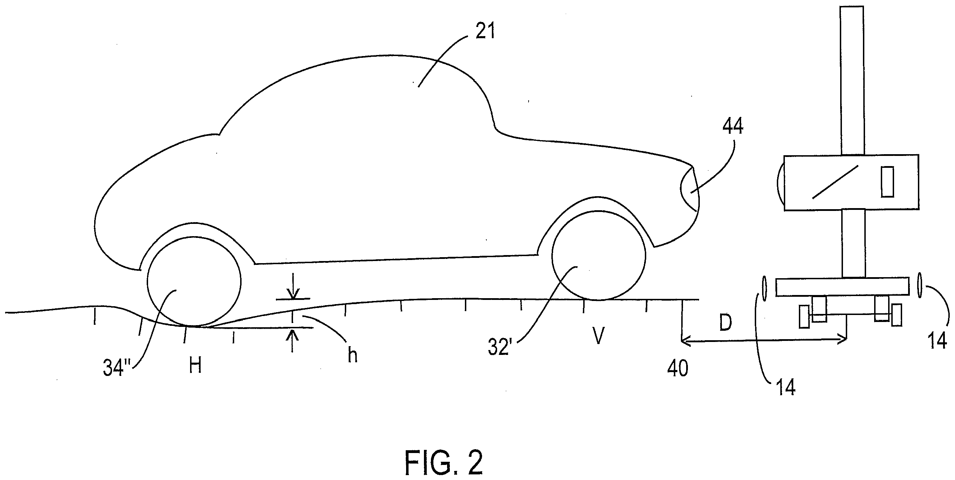

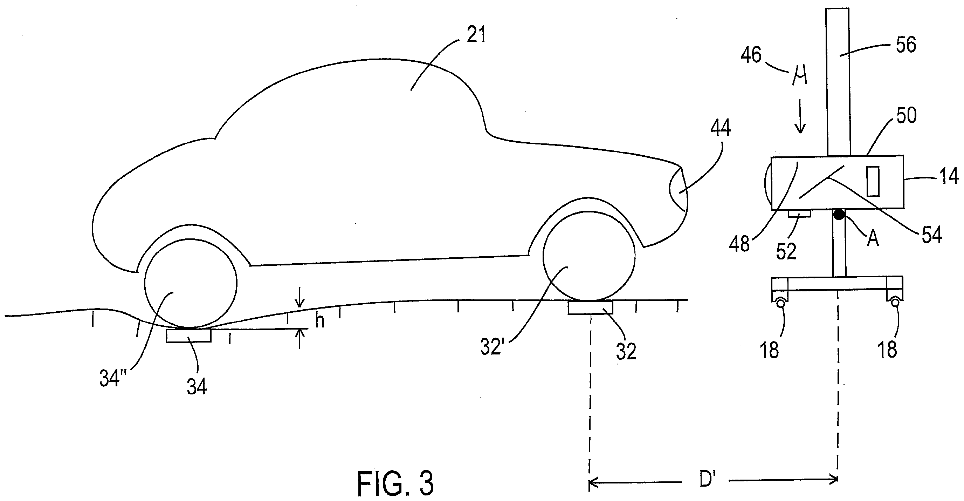

Die Fig. 1 zeigt zunächst eine schematische Draufsicht eines erfindungsgemäß ausgelegten Scheinwerfereinstellprüfplatzes 10. Am linken Ende des Scheinwerfereinstellprüfplatzes 10 befindet sich eine rechteckige Bodenmarkierung 12 innerhalb welcher das erfindungsgemäße Scheinwerfereinstellprüfgerät 14 entsprechend der Pfeilrichtung 16 hin und her verschiebbar angeordnet ist. Das Scheinwerfereinstellprüfgerät 14 ist hier an einem Grundrahmen mit Rädern montiert (siehe z.B. die Fig. 2) und der Benutzer hat lediglich dafür zu sorgen, dass die Räder des Grundrahmens immer innerhalb der Markierung 12 laufen und streng mit dieser Markierung ausgerichtet sind. Stattdessen könnte das Scheinwerfereinstellprüfgerät 14 auf einer fest installierten Schiene 18 bzw. auf einem Schienensystem laufen (wie es z.B. in der Seitenansicht der Fig. 3 gezeigt ist), die eine gleichwertige Alternative zu den Rädern bilden.

Rechts neben der rechteckigen Markierung 12 befindet sich ein größerer rechteckiger Bereich 20 innerhalb dessen, das zu prüfende Fahrzeug 21 (siehe z.B. die Fig. 2) angeordnet werden muss. Es ist hier ein Scheinwerfereinstellprüfplatz 20 gezeigt, der sowohl für die Prüfung der Scheinwerfer von LKWs als auch von PKWs und Motorräder ausgelegt ist. Sollte der Scheinwerfereinstellprüfplatz nur für die Prüfung von PKWs und Motorrädern vorgesehen werden so kann der Bereich 20 entsprechend kleiner ausgeführt werden.

Entlang der einen Längsseite 22 des Scheinwerfereinstellprüfplatzes 10 befindet sich eine Markierung 24 die in Meter und Zentimeter markiert ist. Die Markierung kann am Boden ausgeführt werden, ist aber vorzugsweise durch ein aufgeklebtes Maßband realisiert. Parallel zu der Markierung 24 auf der einen Längsseite 22 des Scheinwerfereinstellprüfplatzes 10, befinden sich weitere entsprechende Markierungen 26, 28, und 30, die alle miteinander und mit der Markierung 24 ausgerichtet sind.

In diesem Beispiel deutet das Bezugszeichen 32 auf eine Aufstandsfläche des rechten Vorderrads eines Fahrzeugs 21, 34 auf eine Aufstandsfläche des rechten Hinterrads des Fahrzeugs 21, 36 auf eine Aufstandsfläche des linken Vorderrads des Fahrzeugs 19 und 38 auf eine Aufstandsfläche des linken Hinterrads eines PKWs. Da Fahrzeuge 19 in verschieden Längen und mit verschiedenen Radständen anzutreffen sind, wird schematisch mit den Bezugszeichen 34' und 38' auf die die Aufstandsflächen der rechten und linken Hinterräder eines längeren PKWs verwiesen.

In diesem Beispiel können die Position der Räder auf den Aufstandsflächen 32 und 34 auf der rechten Seite des Fahrzeugs von der als Maßband ausgebildeten Markierung 24 abgelesen werden, während die Position der Räder auf den Aufstandsflächen 36 und 38 auf der linken Seite des Fahrzeugs 21 von der als Maßband ausgebildeten Markierung 26 abgelesen werden können. An den als Maßband 24, 26 ausgebildeten Markierungen wird jeweils die mittlere Position der Räder auf den Aufstandsflächen 36, 36', 38, 38' gemessen.

Die weiteren Markierungen 28 und 30 machen es möglich die Radpositionen auf den Aufstandsflächen 36, 38, 38' der Räder auf der linken Seite des Fahrzeugs 21 zu messen bzw. abzulesen. Je nachdem welche Arten von Fahrzeugen 21 geprüft werden, können weitere oder weniger Markierungen, wie 28 und 30, vorgesehen werden. Sollten lediglich die Scheinwerfer von Motorrädern (nicht gezeigt) geprüft werden, so genügt eine einzige Markierung 24.

Egal welche Art von Fahrzeug 21 geprüft werden soll, wird es so auf den Scheinwerferprüfplatz 10 gefahren, dass die Räder auf der rechten Seite des Fahrzeugs (oder beide Räder eines Motorrades) sich nahe bei der Markierung 24 befinden.

Unabhängig von der Art von Fahrzeug, das geprüft werden soll, wird das Fahrzeug 21 vorzugsweise so auf dem Scheinwerfereinstellprüfplatz 10 positioniert, dass die Vorderräder auf den vorderen Aufstandsflächen 32, 36 positioniert sind, sodass die Scheinwerfer 44 (siehe Fig. 2) stets an einer fest vorgegebenen relativen Position, wie der Markierung 40 liegen. Wenn die Scheinwerfer 44 schräggestellt sind, soll in etwa die Mitte des Scheinwerfers 44 mit der Markierung 40 ausgerichtet werden. Bei modernen Fahrzeugen 21 liegen die Scheinwerfer 44 in der Regel immer vor den Radaufstandsflächen 32, 36 der vorderen Räder, so dass der Benutzer die Position der Räder ohne weiteres von den Markierungen 24 und 26 bzw. 28 oder 30 ablesen können, die alle in diesem Beispiel relativ zu der Markierung 40 und somit zu der Bodenmarkierung 12 sowie des Scheinwerfereinstellprüfgeräts 14 ausgerichtet sind. Ferner sind Angaben für die X, Y und Z Richtungen des Scheinwerfereinstellplatzes 10 in der Fig. 1 gezeigt, wobei die X Richtung senkrecht zu den Y- und Z-Richtungen verläuft, die Z-Richtung parallel zur der Längsseite 22 verläuft und die Y-Richtung aus der Ebene der Zeichnung hervorsteht.

Bei einer Scheinwerferüberprüfung bestehen grundsätzlich zwei verschiedene Möglichkeiten das Scheinwerfereinstellprüfgerät 14 relativ zum Fahrzeug 21 anzuordnen. Gemäß der ersten Möglichkeit wird die Mitte der Scheinwerfer 44 mit der Markierung 40 ausgerichtet, sodass die Markierung 40 einen festen Abstand D von dem durch die Markierung 12 geführten Scheinwerfereinstellprüfgerät 14 aufweist, dies vereinfacht die Scheinwerfereinstellprüfung gemäß der Erfindung, ist aber nicht unbedingt zwingend erforderlich.

Diese Anordnung geht auch aus der Fig. 2 hervor. Hier sieht man dass der rechte Hauptscheinwerfer 44 mit der Markierung 40 vertikal ausgerichtet ist und dass das rechte Vorderrad 32' an einer Position V steht, während das rechte Hinterrad 34" an der Stelle H steht, die deutlich tiefer liegt als die Position V, so dass ein Höhenunterschied h zwischen der Position V des rechten Vorderrads 32' und der Stelle H des rechten Hinterrads 36' vorliegt.

Bei der zweiten Möglichkeit, das Scheinwerfereinstellprüfgerät 14 relativ zum Fahrzeug 21 anzuordnen, werden die Vorderräder eines Fahrzeugs 21 auf vorderen Aufstandsflächen 32, 36 positioniert, wobei die vorderen Aufstandsflächen 32, 36 dann einen festen Abstand D' von dem durch die Markierung 12 geführten Scheinwerfereinstellprüfgerät 14 aufweisen. Diese Möglichkeit wird in der Fig. 3 gezeigt.

Die Fig. 3 zeigt auch wie der Benutzer mit seinem Auge 46, durch ein Fenster 48 des Scheinwerfereinstellprüfgeräts 14 schauen kann, um zu prüfen, dass der Lichtkasten 50 des Scheinwerfereinstellprüfgeräts 14 waagerecht ausgerichtet ist. Dabei kann er durch eine schräggestellte halbdurchlässige Platte 54 auf eine Libelle 52 schauen und die Winkelposition des Kastens 50 ggf. korrigieren. Wie bei herkömmlichen Scheinwerfereinstellprüfgeräten üblich kann der Benutzer den Kasten 50 auch senkrecht entlang der Säule 56 bewegen, damit der Kasten 50 mit der Mitte des Scheinwerfers 44 ausgerichtet ist.

Ferner ist in der Fig. 3 auch eine Horizontalachse A des Scheinwerfereinstellprüfgeräts 14 gezeigt. Das Scheinwerfereinstellprüfgerät 14 kann um diese Horizontalachse geneigt werden, um den Lichtkasten 50 des Scheinwerfereinstellprüfgeräts 14 waagerecht auszurichten.

Im Beispiel der Fig. 2 und Fig. 3 sollte beachtet werden, dass es bevorzugt ist, das die Aufstandsflächen 32, 36 der Vorderräder 32' auf einem gemeinsamen Höhenniveau liegen und zwar derart, dass diese auf dem gleichen Höhenniveau liegen wie die Räder bzw. Schienen 18 mittels derer das Scheinwerfereinstellprüfgerät 14 von der rechten Seite des Fahrzeugs zur linken Seite und zurück verfahrbar ist.

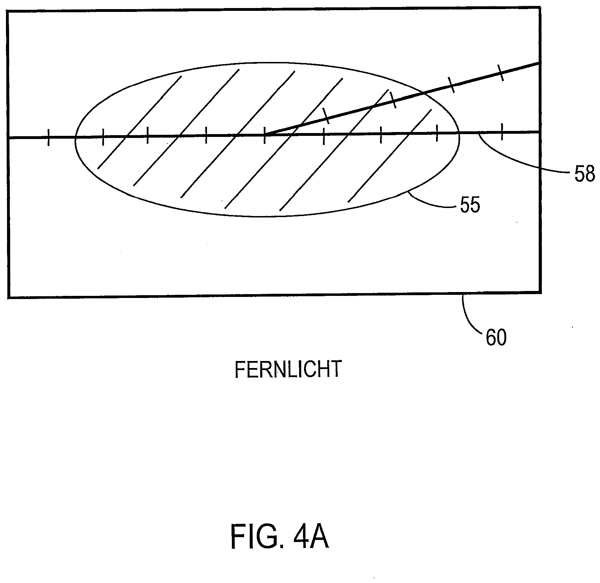

Wenn es sich bei dem Scheinwerfereinstellprüfgerät um ein herkömmliches Prüfgerät handelt, würde der Benutzer bei einem richtig eingestellten Scheinwerfer 44 für das Fernlicht ein Abbild 55 des Scheinwerfers entsprechend der Fig. 4A sehen, die richtige Position des Abbildes kann er anhand der Markierung 58 am Schirm 60 erkennen.

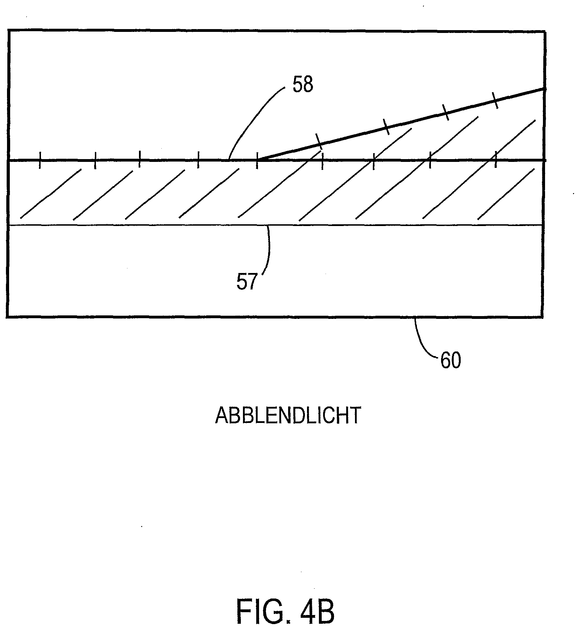

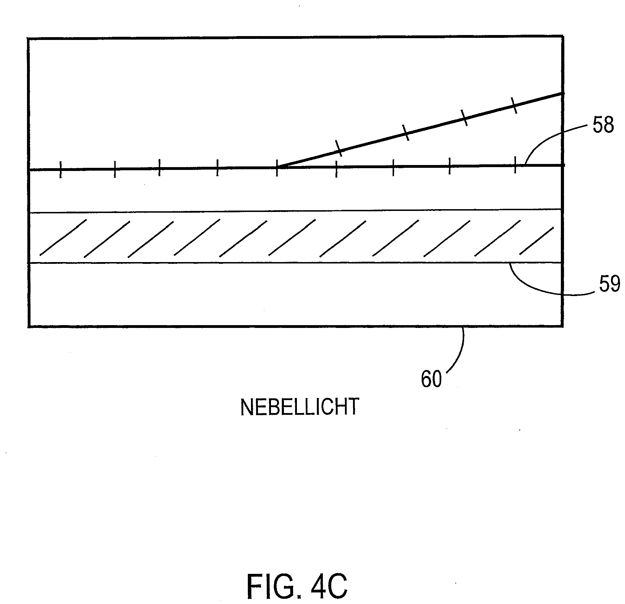

Wenn das Abblendlicht eingeschaltet wird, sieht das Abbild 57 des Scheinwerfers bei der korrekten Einstellung so aus wie in Fig. 4B gezeigt, Die entsprechende Darstellung für das Abbild 59 bei einem richtig eingestellten Nebellicht wird in der Fig. 4C gezeigt.

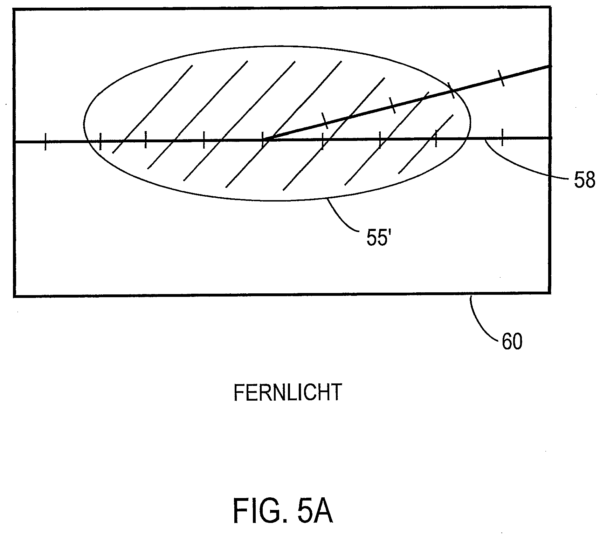

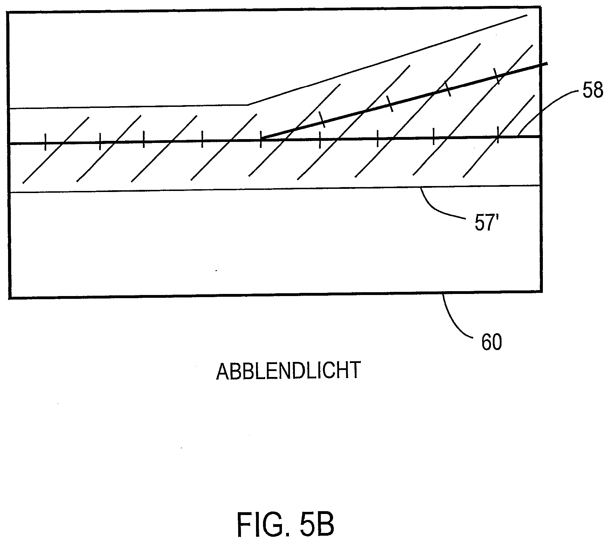

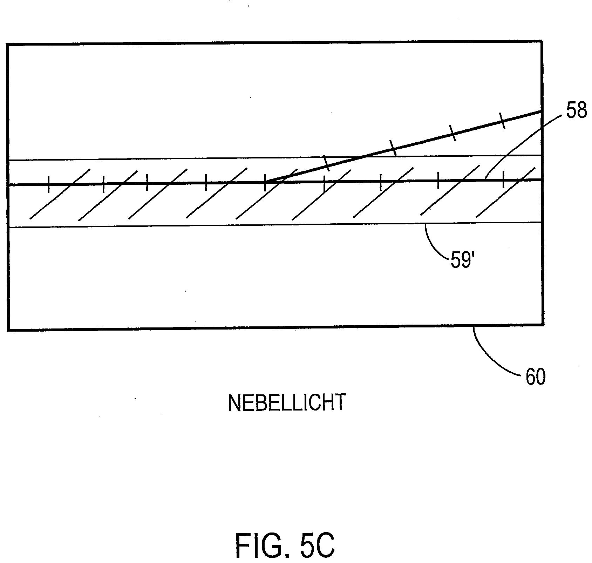

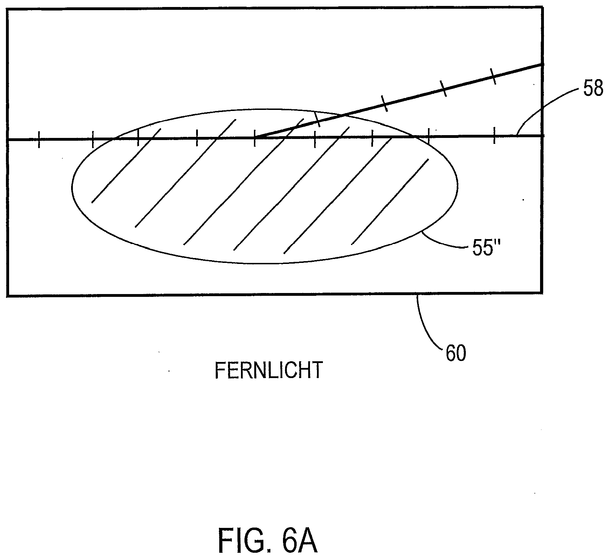

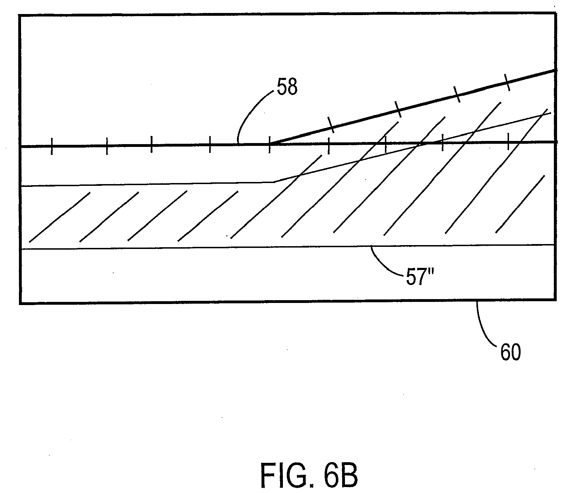

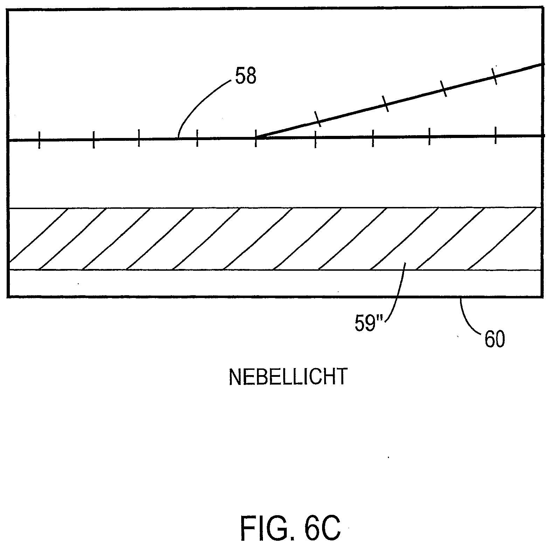

Zum Vergleich zeigen die Fig. 5A, 5B und 5C vergleichbare Abbilder 55', 57' und 59' bei inkorrekt eingestellten Scheinwerfern, wenn diese zu hoch eingestellt sind und bei Verwendung Gegenverkehr blenden würden, während die Fig. 6A, 6B und 6C die vergleichbaren Abbilder 55", 57" und 59" zeigen, wenn die Scheinwerfer zu tief eingestellt sind und bei Verwendung die Straße nicht ausreichend ausleuchten würden.

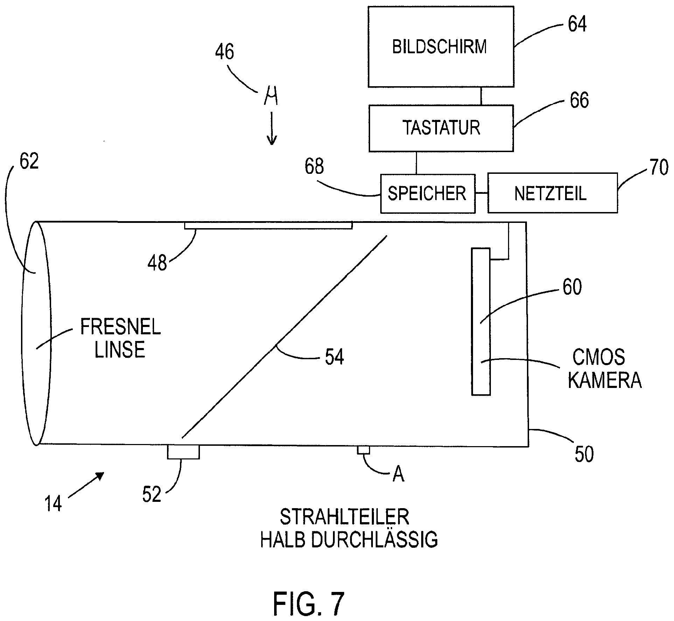

Die Fig. 7 zeigt eine schematische Darstellung von Komponenten eines erfindungsgemäßen Scheinwerfereinstellprüfgeräts 14 mit einem als CMOS-Kamera ausgebildeten Monitor 60. Der Monitor 60 ist an einem Ende im Kasten 50 des Scheinwerfereinstellprüfgeräts 14 angeordnet. Am gegenüberliegenden Ende des Kastens 50 ist eine als Scheinwerferlichteingangsfenster ausgebildete Fresnellinse 62 angeordnet.

Die CMOS-Kamera 60 ist eine elektronische Aufzeichnungseinheit, die mehrere Pixel des Abbildes aufnehmen kann. Den Pixeln der CMOS-Kamera kann eine Referenzmarkierung 58 zugeordnet werden (siehe z.B. die Fig. 4A), deren Position entsprechend dem jeweiligen im Datenspeicher gespeicherten Höhenunterschied h bzw. Wert kompensierbar, insbesondere zumindest vertikal verschiebbar ist.

Die Fresnellinse 62 ist dazu ausgebildet, dass Licht eines Schweinwerfers, z.B. des Scheinwerfers 44, derart zu bündeln, dass es mittig auf dem als CMOS Kamera ausgebildeten Monitor 60 auftritt, um dort Abbilder 55, 55', 55", 57, 57', 57", 59, 59', 59" gemäß den Figuren 4A bis 6C der jeweiligen zu untersuchenden Scheinwerfer zu erzeugen. Hierbei ist zu beachten, dass das Licht eines Scheinwerfers 44 im Wesentlichen divergent ist und nach durchlaufen der Fresnellinse 62 im Wesentlichen konvergent ist. Die Verstärkung die durch die Fresnellinse 62 herbeigeführt wird, wird in der Regel in Abhängigkeit des zu verwendenden Monitors ausgewählt. Bei Verwendung einer CMOS-Kamera als Monitor 60 wird eine größere Verstärkung bevorzugt im Vergleich zu einer mehrere Dioden umfassenden Diodenmatrix.

In dem gezeigten Beispiel der Fig. 7 passiert das durch die Fresnellinse 62 gebündelte Licht den Strahlteiler 54. Der Strahlteiler 54 ist in diesem Beispiel vorgesehen, sodass ein Benutzer des Scheinwerfereinstellprüfgeräts 14, den die Komponenten umfassenden Kasten 50 in seiner horizontalen Position relativ zum Scheinwerfer 44 Waagrecht ausrichten kann, in dem er mittels des Auges 46 und der Libelle 52 den Kasten 50 in seiner Position justieren kann.

Sollte eine die Libelle 52 umfassende Wasserwaage an einer anderen Stelle im bzw. am Kasten 50 als gezeigt angeordnet sein, könnte ein erfindungsgemäßes Scheinwerfereinstellprüfgerät 14 auch ohne Strahlteiler 54 ausgebildet sein (nicht gezeigt).

Ferner umfassen die Komponenten eines Scheinwerfereinstellprüfgeräts 14, einen Bildschirm 64, eine als Tastatur ausgebildete Eingabemöglichkeit 66, einen Datenspeicher 68, und ein Netzteil 70.

Der Bildschirm 64 ist dazu ausgebildet, Resultate einer Scheinwerfereinstellungsprüfung darzustellen. Diese Resultate können, z.B. ähnlich der Abbildungen der Fig. 4A bis 6C angezeigt werden, sodass ein Benutzer weiß, ob der zu prüfende Scheinwerfer richtig eingestellt ist oder nicht. Hierzu können die als Korrekt angesehenen Abbildungen des jeweiligen Scheinwerfers als Referenzmarkierung zusätzlich im Bildschirm 64 angezeigt werden, sodass mit einem Blick vom Benutzer erkannt werden kann, ob der zu untersuchende Scheinwerfer hiervon abweicht oder korrekt eingestellt ist.

Die Positionen V, H der Räder 32', 34" des zu untersuchenden Fahrzeugs 21, bzw. die Position einer jeweiligen Aufstandsfläche 32, 34, 34', 36, 38, 38' des zu untersuchenden Fahrzeugs 21, können am Scheinwerfereinstellprüfgerät 14 mittels der Eingabemöglichkeit 66 eingegeben werden.

Somit umfasst das Scheinwerfereinstellprüfgerät 14 eine Eingabemöglichkeit für die jeweiligen Positionsangaben entsprechend der Position V, H zumindest des einen rechten Hinterrades 34" des zu prüfenden Fahrzeugs 21.

Um dem Scheinwerfereinstellprüfgerät 14 ferner mitteilen zu können welche Art von Scheinwerfer derzeit geprüft wird, kann dies ebenfalls mittels der Eingabemöglichkeit 66 eingegeben werden.

Im Datenspeicher 68 sind eine Mehrzahl von Werten für Höhenunterschiede h für verschiedene mögliche Positionen H der Aufstandsflächen 34, 34', 38, 38' eines Hinterrads 34" in Bezug auf mögliche Positionen V der Aufstandsflächen 32, 36 eines Vorderrades 32' abgelegt. Diese Werte werden bei der Durchführung der Prüfung der Scheinwerfereinstellung benützt, um den jeweils geltenden Wert aus den gespeicherten Werten auszuwählen und zu berücksichtigen, um den Monitor 60 bzw. die Referenzmarkierung 58 an diesen Höhenunterschied anzupassen.

Zusätzlich zu bzw. anstelle eines Wertes für den Höhenunterschied h bei einer spezifischen Position des Hinterrades, kann eine Winkelkorrekturangabe oder einen diesen umfassenden Wert im Datenspeicher hinterlegt werden, anhand welcher oder dessen die Position des Monitors 60 bzw. der Referenzmarkierung 58 angepasst werden kann.

Der Datenspeicher 68 umfasst verschiedene Daten. Diese können z.B. der Topographie des jeweiligen Scheinwerfereinstellprüfplatzes 10 entsprechen, d.h. der tatsächlichen X, Y, Z Position des Bodens des Scheinwerfereinstellprüfplatzes 10. Zusätzlich oder alternativ hierzu können auch Daten vorgesehen sein die Tabellenwerte umfassen, die dem jeweiligen Höhenunterschied zwischen möglichen Aufstandsflächen eines Hinterrads und möglichen Aufstandsflächen eines Vorderrades auf dem Scheinwerfereinstellprüfplatzes 10 entsprechen. Vorzugsweise sind die auf dem Scheinwerfereinstellprüfplatz 10 vorgesehenen Markierungen 24, 26, 28, 30 Positionsangaben zugewiesen, die den Tabellenwerten zugeordnet sind.

Die Daten, die im Datenspeicher 68 hinterlegt sind, können durch eine wie auch immer geartete Abtasteinrichtung erfasst werden, die dazu ausgebildet ist den Scheinwerfereinstellplatz 10 abzutasten, sodass Höhenunterschiede h in der Y-Richtung (siehe Fig. 1) der verschiedenen Positionen der Räder eines Fahrzeugs 21 relativ zueinander im Datenspeicher abgespeichert werden können.

Z.B. kann ein jeweiliger Höhenunterschied h in der Y-Richtung zwischen den Aufstandsflächen 32, 36 der Vorderräder 32' und der Aufstandsflächen 34, 38 Hinterräder 34" für Abstände in der Z-Richtung (siehe Fig. 1) im 20 cm Bereich, vorzugsweise im 15 cm Bereich, insbesondere im 5 cm Bereich und besonders bevorzugt im Bereich von 1 cm abgespeichert werden.

Ferner kann ein jeweiliger Höhenunterschied h in der Y-Richtung zwischen den Aufstandsflächen 32, 36 der Vorderräder 32' und der Aufstandsflächen 34, 38 Hinterräder 34" für verschiedene Spurbreiten hinterlegt werden, die Höhenunterschiede h können bei verschiedenen Spurbreiten in der X-Richtung (siehe Fig. 1) mit Abständen im 15 cm Bereich, vorzugsweise im 10 cm Bereich, insbesondere im 5 cm Bereich und besonders bevorzugt im Bereich von 1 cm abgespeichert werden.

Das Netzteil 70 wird dazu verwendet die einzelnen stromverbrauchenden Komponenten des Scheinwerfereinstellprüfgeräts 14 mit Strom zu versorgen. Hierzu kann das Netzteil 70 auch eine Batterie sein, die mittels einer Stromversorgung (nicht gezeigt) aufgeladen werden kann.

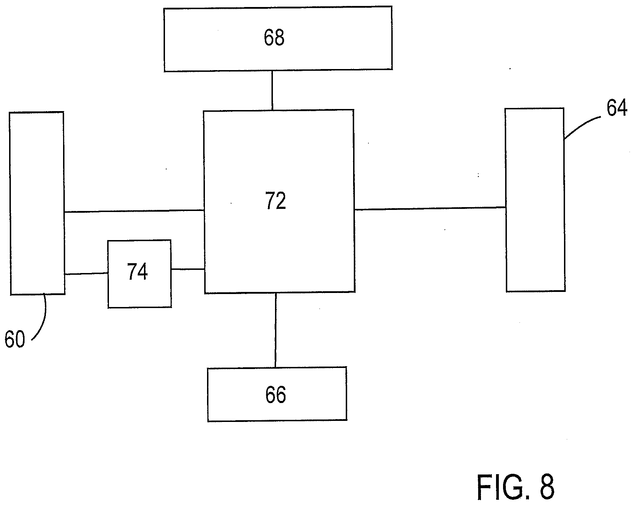

Die Fig. 8 zeigt eine weitere schematische Ansicht von Komponenten des erfindungsgemäßen Scheinwerfereinstellprüfgeräts 14. Diese umfassen zusätzlich eine Auswerteeinheit 72, die sowohl mit dem Monitor 60, dem Bildschirm 64, dem Datenspeicher 68 und der Eingabemöglichkeit 66 verbunden ist.

Die Auswerteeinheit 72 kann zusätzlich mit einer Einstelleinrichtung 74 verbunden sein. Die Einstelleinrichtung 74 kann dazu ausgebildet sein den Monitor 60 bzw. den Kasten 50 in seiner Position zu bewegen. Diese Bewegungen können z.B. ein verschieben in der Vertikalen Position und/oder ein neigen um eine Horizontalachse umfassen.

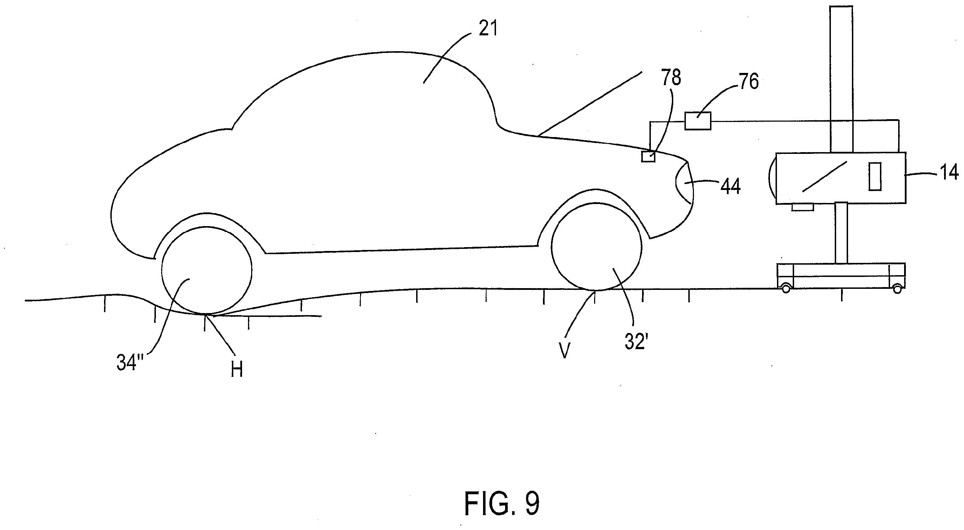

Fig. 9 zeigt eine schematische Darstellung ähnlich der Fig. 2 oder 3. In diesem Ausführungsbeispiel ist eine zusätzliche Schnittstelle 76 vorgesehen. Mittels dieser Schnittstelle 76 kann eine Anhand des Monitors 60 des Scheinwerfereinstellprüfgeräts 14 detektierte und in der Auswerteeinheit 72 erkannte Abweichung des Scheinwerfers 44 mittels einer Scheinwerfereinstellvorrichtung 78 des Fahrzeuges 21, vorzugsweise automatisch, korrigiert werden.

Bei einem unebenen Boden trifft das Licht eines korrekt eingestellten Scheinwerfers 44 den Monitor 60 auf einer anderen Höhe als die die durch die Referenzmarkierung 58 angezeigt wird. Wenn die Hinterräder 34" bzw. deren Aufstandsflächen niedriger liegen als die Vorderräder (siehe z.B. die Fig. 3), wird auf dem Monitor 60 ein Zustand angezeigt, der ähnlich der Fig. 5A bis 5C dem Benutzer vermittelt, dass die Scheinwerfer zu hoch eingestellt sind. Sollten die Hinterräder 34" höher liegen als die Vorderräder (nicht gezeigt), wird auf dem Monitor 60 ein Zustand angezeigt, der ähnlich der Fig. 6A bis 6C dem Benutzer vermittelt, dass die Scheinwerfer zu niedrig eingestellt sind. Die Erfindung macht sich dieser Erkenntnis zu Nutze, nämlich durch eine Verschiebung der Referenzmarkierung 58 bzw. des Monitors 60 in Abhängigkeit der tatsächlichen Höhe des Hinterrads 34" relativ zum Vorderrad, möglicherweise mittels einer zusätzlicher Bewegung der Position des Monitors 60.

Beispielsweise, wird, bei Hinterrädern 34" bzw. deren Aufstandsflächen 34, 38, die niedriger liegen als die Vorderräder 32' bzw. deren Aufstandsflächen 32, 36, der Monitor 60 bzw. die Referenzmarkierung 58 nach oben verschoben. Sollten die Hinterräder 34" bzw. deren Aufstandsflächen 34, 38, höher liegen als die Vorderräder 32' bzw. deren Aufstandsflächen 32, 36, wird der Monitor 60 bzw. die Referenzmarkierung 58 gemäß vorliegender Erfindung nach unten verschoben.

Beim Betreiben des Scheinwerfereinstellprüfgeräts 14 wird ein Fahrzeug 21, z.B. gemäß einem der Figuren 2 und 3, auf dem Scheinwerfereinstellplatz 10 Positioniert. Die Position der Räder V, H wird von den Markierungen 24 und 26 abgelesen und mittels der Eingabemöglichkeit 66 am Scheinwerfereinstellprüfgerät 14 eingegeben. Die Auswerteeinheit 72 kann die eingegebenen Werte mit den dafür in dem Datenspeicher 68 abgelegten Werten vergleichen.

Anschließend wird der Monitor 60 bzw. die damit assoziierte Referenzmarkierung 58 entsprechend dem jeweiligen im Datenspeicher gespeicherten Höhenunterschied bzw. Wert vertikal verschoben und/oder um die Horizontalachse A geneigt, wodurch die Position des Monitors 60 entsprechend dem jeweiligen Höhenunterschied h bzw. Wert bewegt worden ist. Durch die Bewegung des Monitors 60 bzw. der Referenzmarkierung 58 wird das Prüfergebnis über die Einstellung des Scheinwerfers nicht verfälscht.

Bei kleinen Höhenunterschieden h bzw. einem diesen entsprechenden Wert können die mittels des Monitors 60 erfassten Daten rein Digital in der Auswerteeinheit korrigiert werden.

Sollten die in der Datenbank abgelegten Werte einen Höhenunterschied h anzeigen, der nicht nur mittels einer Digitalen Anpassung der Referenzmarkierung 58 im Monitor 60 berücksichtigt werden können, sondern auch eine physikalische Verschiebung des Monitors 60 benötigen, kann diese Verschiebung mittels der Einstelleinrichtung 74, anhand von Parametern, die durch die Auswerteeinheit 72 vorgegeben sind, durchgeführt werden. Diese Parameter können am Bildschirm 64 angezeigt werden, sodass der Benutzer entweder die Einstelleinrichtung 74 von Hand anpassen, oder eine automatische Anpassung, die z.B. mittels eines oder mehreren Stellmotoren (nicht gezeigt) anhand von Steuerbefehlen die durch die Auswerteeinheit 72 vorgegeben werden, herbeigeführt wird, überprüfen kann.

Somit kann eine Scheinwerfereinstellung eines Scheinwerfers geprüft werden. In dem ein Höhenunterschied h zwischen der Aufstandsfläche 34, 34', 36, 36' eines auf der Seite des jeweils geprüftem Scheinwerfers angeordneten Hinterrades 34" und der Aufstandsfläche 32, 36 des entsprechenden Vorderrades 32' oder einem diesen Höhenunterschied h entsprechenden Wert im Voraus abspeichert ist und ein Korrekturwert für die zu erwartete Position des Abbildes 55, 57, 59 auf dem Monitor 60 bei korrekter Einstellung ermittelt wird, der die Auswirkung des Höhenunterschieds h auf die Beurteilung der jeweiligen Einstellung des jeweiligen Scheinwerfers kompensiert, sodass die Scheinwerfereinstellprüfung unter Berücksichtigung des kompensierten Höhenunterschieds h durchgeführt werden kann.

### Bezugszeichenliste:

- 10: Scheinwerfereinstellprüfplatzes
- 12: Bodenmarkierung
- 14: Scheinwerfereinstellprüfgerät
- 16: Pfeilrichtung
- 18: Schiene
- 20: Bereich
- 21: Fahrzeug
- 22: Längsseite
- 24: Markierung, Maßband
- 26: Markierung, Maßband
- 28: Markierung
- 30: Markierung
- 32: Aufstandsfläche rechtes Vorderrad
- 32': rechtes Vorderrad
- 34, 34': Aufstandsfläche rechtes Hinterrad
- 34": rechtes Hinterrad
- 36: Aufstandsfläche linkes Vorderrad
- 38, 38': Aufstandsfläche linkes Hinterrad
- 40: Markierung
- 44: Scheinwerfer
- 46: Auge
- 48: Fenster
- 50: Kasten
- 52: Libelle
- 54: Platte
- 55, 55', 55": Abbild
- 56: Säule
- 57, 57', 57": Abbild
- 58: Markierung
- 59, 59', 59": Abbild
- 60: Monitor
- 62: Fresnellinse
- 64: Bildschirm
- 66: Eingabemöglichkeit
- 68: Datenspeicher
- 70: Netzteil
- 72: Auswerteeinheit
- 74: Einstelleinheit
- 76: Schnittstelle
- 78: Scheinwerfereinstellvorrichtung

- A: Horizontalachse
- H: Stelle
- h: Höhenunterschied
- V: Position

## Patentansprüche

1. Scheinwerfereinstellprüfgerät (14) zur Anwendung auf einem Scheinwerfereinstellprüfplatz (10), mit einer ein Abbild des geprüften Scheinwerfers (44) auf einem Monitor (60) richtenden Linse (62), mit einem Datenspeicher (68), der Daten umfasst, die der Topographie des jeweiligen Scheinwerfereinstellprüfplatzes (10), d.h. der tatsächlichen X, Y, Z Position des Bodens des Scheinwerfereinstellprüfplatzes (10) entsprechen, und daher den Höhenunterschied (h) zwischen der Aufstandsfläche (34, 34', 38, 38') eines auf der Seite des jeweils geprüftem Scheinwerfers (44) angeordneten Hinterrades (34") und der Aufstandsfläche (32, 36) des entsprechenden Vorderrades (32') speichert und mit einer den jeweiligen Höhenunterschied (h) berücksichtigende Korrekturmöglichkeit für die Position des Abbildes auf dem Monitor (60), wodurch die Auswirkung des Höhenunterschieds (h) auf die Beurteilung der jeweiligen Einstellung des jeweiligen Scheinwerfers (44) kompensierbar ist.

2. Scheinwerfereinstellprüfgerät (14) nach Anspruch 1,
**dadurch gekennzeichnet, dass** der Monitor (60) eine Pixelaufzeichnende Digitalkamera, insbesondere eine CMOS-Kamera, eine CCD-Kamera oder eine andere Pixel des Abbildes aufnehmende elektronische Aufzeichnungseinheit, ist.

3. Scheinwerfereinstellprüfgerät (14) nach Anspruch 2,
**dadurch gekennzeichnet, dass** den Pixels der Digitalkamera eine Referenzmarkierung (58) zuordenbar ist, deren Position entsprechend dem jeweiligen im Datenspeicher (68) gespeicherten Höhenunterschied (h) bzw. Wert kompensierbar, insbesondere zumindest vertikal verschiebbar, ist.

4. Scheinwerfereinstellprüfgerät (14) nach einem der vorherigen Ansprüche, **dadurch gekennzeichnet, dass** der Monitor (60) entsprechend dem jeweiligen im Datenspeicher (68) gespeicherten Höhenunterschied (h) bzw. Wert vertikal verschiebbar und/oder um eine Horizontalachse (A) neigbar ist, wodurch die Position des Monitors (60) entsprechend dem jeweiligen Höhenunterschied (h) bzw. Wert bewegbar ist und das Prüfergebnis die Einstellung des Scheinwerfers (44) nicht verfälscht.

5. Scheinwerfereinstellprüfgerät (14) nach Anspruch 1,
**dadurch gekennzeichnet, dass** der Monitor (60) eine Referenzmarkierung (58) trägt, und entsprechend dem jeweiligen im Datenspeicher (68) gespeicherten Höhenunterschied (h) bzw. Wert vertikal verschiebbar und/oder um eine Horizontalachse neigbar ist, wodurch die Position der Referenzmarkierung (58) entsprechend dem jeweiligen Höhenunterschied (h) bzw. Wert bewegbar ist und das Prüfergebnis die Einstellung des Scheinwerfers nicht verfälscht.

6. Scheinwerfereinstellprüfgerät (14) nach einem der vorherigen Ansprüche, **dadurch gekennzeichnet, dass** der Datenspeicher (68) Daten als Tabellenwerte umfasst, die dem jeweiligen Höhenunterschied (h) zwischen möglichen Aufstandsflächen (34, 34', 38, 38') eines Hinterrads (34") und möglichen Aufstandsflächen (32, 36) eines Vorderrades (32') auf dem Scheinwerfereinstellprüfplatzes (10) entsprechen.

7. Scheinwerfereinstellprüfgerät (14) nach Anspruch 6 in Kombination mit einem Scheinwerfereinstellprüfplatz,
**dadurch gekennzeichnet, dass** auf dem Scheinwerfereinstellprüfplatz (10) Markierungen (24, 26, 28, 30, 40) vorgesehen sind, deren Positionsangaben den Tabellenwerten zugeordnet sind.

8. Scheinwerfereinstellprüfgerät (14) nach Anspruch 7
**dadurch gekennzeichnet, dass** das Scheinwerfereinstellprüfgerät (14) eine Eingabemöglichkeit (66) für die jeweiligen Positionsangaben entsprechend der Position (H) zumindest des Hinterrades (34") des geprüften Fahrzeugs (21) umfasst.

9. Scheinwerfereinstellprüfgerät (14) nach einem der vorherigen Ansprüche, **dadurch gekennzeichnet dass** der Datenspeicher (68) Daten umfasst, die durch eine Abtasteinrichtung erfassbar sind, die den Scheinwerfereinstellplatz (10) abtastet.

10. Scheinwerfereinstellprüfgerät (14) nach Anspruch 9,
**dadurch gekennzeichnet, dass** die Abtasteinrichtung zumindest einen Laser, ein Ultraschallmessgerät, ein Radarmessgerät oder ein anderes Koordinatenmessgerät umfasst.

11. Scheinwerfereinstellprüfgerät (14) nach Anspruch 7,
wobei auf dem Scheinwerfereinstellprüfplatz (10) Markierungen (24, 26, 28, 30) vorgesehen sind, die den möglichen Aufstandsflächen (34, 34', 38, 38') eines Hinterrads (34") und möglichen Aufstandsflächen (32, 36) eines Vorderrades (32') auf dem Scheinwerfereinstellprüfplatzes (10) markieren, deren Positionsangaben den Höhenunterschieden (h) zwischen den möglichen Aufstandsflächen eines Hinterrads und möglichen Aufstandsflächen eines Vorderrades zuordenbar sind.

12. Scheinwerfereinstellprüfgerät (14) nach einem der vorherigen Ansprüche 1 bis 11, **dadurch gekennzeichnet, dass** eine Schnittstelle (76) vorgesehen ist mittels derer Daten zwischen dem Scheinwerfereinstellprüfgerät (14) und einem Scheinwerfer (44) austauschbar sind, um anhand einer gemessenen Abweichung einer Scheinwerfereinstellung von einer Solleinstellung, die Einstellung zu korrigieren.

13. Verfahren zum Prüfen einer Scheinwerfereinstellung auf einem Scheinwerfereinstellprüfplatz (10) mit einem Scheinwerfereinstellprüfgerät nach einem der vorherigen Ansprüche 1 bis 12, **dadurch gekennzeichnet, dass** die Topologie des jeweiligen Scheinwerfereinstellplatzes (10), d.h. die tatsächlichen X, Y, Z Position des Bodens des Scheinwerfereinstellprüfplatzes (10) durch eine Abtasteinrichtung abgetastet und gespeichert wird, dass ein Höhenunterschied (h) zwischen der Aufstandsfläche (34, 34') eines auf der Seite des jeweils geprüftem Scheinwerfers (44) angeordneten Hinterrades (34") und der Aufstandsfläche (32, 36) des entsprechenden Vorderrades (32') aus der gespeicherten Topologie ermittelt wird und ein Korrekturwert für die erwartete Position des Abbildes auf dem Monitor (60) bei korrekter Einstellung ermittelt wird, die Auswirkung des Höhenunterschieds (h) auf die Beurteilung der jeweiligen Einstellung des jeweiligen Scheinwerfers (44) kompensiert wird und die Scheinwerfereinstellprüfung unter Berücksichtigung des kompensierten Höhenunterschieds (h) durchgeführt wird.

14. Verfahren nach Anspruch 13, **dadurch gekennzeichnet, dass** eine Mehrzahl von Werten für Höhenunterschiede (h) für verschiedene mögliche Positionen der Aufstandsflächen (34, 34', 38, 38') eines Hinterrads (34") in Bezug auf mögliche Aufstandsflächen (32, 36) eines Vorderrades (32') ermittelt und im Datenspeicher (68) abgelegt werden, dass bei der Durchführung der Prüfung der Scheinwerfereinstellung die jeweilige Position der Aufstandsfläche des Hinterrads (34") in Bezug auf die Aufstandsfläche des Vorderrades (32') benützt wird, um den jeweils geltenden Wert aus den gespeicherten Werten auszuwählen und wobei der jeweils geltende Wert für die erforderliche Kompensation berücksichtigt wird.

15. Verfahren nach Anspruch 13 oder 13, **dadurch gekennzeichnet, dass** der Monitor (60) eine Pixelaufzeichnende Digitalkamera, insbesondere eine CMOS-Kamera, eine CCD-Kamera oder eine andere Pixel des Abbildes aufnehmende elektronische Aufzeichnungseinheit, ist, wobei den Pixels der Digitalkamera eine Referenzmarkierung (58) zugeordnet wird, deren Position entsprechend dem jeweiligen im Datenspeicher (68) gespeicherten Höhenunterschied (h) bzw. Wert kompensiert wird, insbesondere zumindest vertikal verschoben wird.

16. Verfahren nach einem der Ansprüche 13 bis 15, **dadurch gekennzeichnet, dass** der Monitor (60) eine Referenzmarkierung (58) trägt, und entsprechend dem jeweiligen im Datenspeicher (68) gespeicherten Höhenunterschied (h) vertikal verschiebbar und/oder um eine Horizontalachse (A) neigbar ist, wodurch die Position der Referenzmarkierung (58) entsprechend dem jeweiligen Höhenunterschied (h) bzw. Wert bewegbar ist und das Prüfergebnis die Einstellung des Scheinwerfers (44) nicht verfälscht.

## Claims

1. A headlamp setting test device (14) for use on a headlamp setting test station (10), said headlamp setting test device (14) comprising a lens (62) directing an image of the tested headlamp (44) to a monitor (60), a data memory (68) which comprises data which correspond to the topography of the respective headlamp setting test station (10), i.e. to the actual X, Y, Z positions of the floor of the headlamp setting test station (10), and therefore stores the vertical difference (h) between the contact patch (34, 34', 38, 38') of a rear wheel (34") arranged on the side of the respective tested headlamp (44) and the contact patch (32, 36) of the corresponding front wheel (32'), and a correction possibility for the position of the image on the monitor (60) that takes account of the respective vertical difference (h), whereby the effect of the vertical distance (h) on the evaluation of the respective setting of the respective headlamp (44) can be compensated.

2. A headlamp setting test device (14) in accordance with claim 1, **characterized in that** the monitor (60) is a pixel recording digital camera, in particular a CMOS camera, a CCD camera, or another electronic recording unit recording pixels of the image.

3. A headlamp setting test device (14) in accordance with claim 2, **characterized in that** a reference marking (58) whose position can be compensated in accordance with the respective vertical difference (h) or value stored in the data memory (68), and is in particular at least vertically displaceable, can be associated with the pixels of the digital camera.

4. A headlamp setting test device (14) in accordance with any one of the preceding claims,
**characterized in that** the monitor (60) is vertically displaceable in accordance with the respective vertical difference (h) or value stored in the data memory (68) and/or can be inclined about a horizontal axis (A), whereby the position of the monitor (60) is movable in accordance with the respective vertical difference (h) or value and the test result does not falsify the setting of the headlamp (44).

5. A headlamp setting test device (14) in accordance with claim 1,
**characterized in that** the monitor (60) bears a reference marking (58) and is vertically displaceable in accordance with the respective vertical difference (h) or value stored in the data memory (58) and/or can be inclined about a horizontal axis, whereby the position of the reference marking (58) is movable in accordance with the respective vertical difference (h) or value and the test result does not falsify the setting of the headlamp.

6. A headlamp setting test device (14) in accordance with any one of the preceding claims,
**characterized in that** the data memory (68) comprises data as tabular values which correspond to the respective vertical difference (h) between possible contact patches (34, 34', 38, 38') of a rear wheel (34") and possible contact patches (32, 36) of a front wheel (32') on the headlamp setting test station (10).

7. A headlamp setting test device (14) in accordance with claim 6 in combination with a headlamp setting test station (10),
**characterized in that** markings (24, 26, 28, 30, 40) whose positional indications are associated with the tabular values are provided on the headlamp setting test station (10).

8. A headlamp setting test device (14) in accordance with claim 7, **characterized in that** the headlamp setting test device (14) comprises an input option (66) for the respective positional indications corresponding to the position (H) of at least the rear wheel (34") of the tested vehicle (21).

9. A headlamp setting test device (14) in accordance with any one of the preceding claims,
**characterized in that** the data memory (68) comprises data which can be captured by a scanning device which scans the headlamp setting station (10).

10. A headlamp setting test device (14) in accordance with claim 9, **characterized in that** the scanning device comprises at least a laser, an ultrasound measuring device, a radar measuring device, or another coordinate measuring device.

11. A headlamp setting test device (14) in accordance with claim 7,
wherein markings (24, 26, 28, 30) are provided on the headlamp setting test station (10) that mark the possible contact patches (34, 34', 38, 38') of a rear wheel (34") and possible contact patches (32, 36) of a front wheel (32') on the headlamp setting test station (10) whose positional indications can be associated with the vertical differences (h) between the possible contact patches of a rear wheel and possible contact patches of a front wheel.

12. A headlamp setting test device (14) in accordance with any one of the preceding claims 1 to 11, **characterized in that** an interface (76) is provided by means of which data can be exchanged between the headlamp setting test device (14) and a headlamp (44) to correct the setting with reference to a measured deviation of a headlamp setting from a desired setting.

13. A method of testing a headlamp setting on a headlamp setting test station (10) by means of a headlamp setting test device in accordance with any one of the preceding claims 1 to 12, **characterized in that** the topology of the respective headlamp setting station (10), i.e. the actual X, Y, Z positions of the floor of the headlamp setting test station (10), is set and stored by a scanning device such that a vertical difference (h) between the contact patch (34, 34') of a rear wheel (34") arranged on the side of the respective tested headlamp (44) and the contact patch (32, 36) of the corresponding front wheel (32') is determined from the stored topology and a correction value for the expected position of the image on the monitor (60) with a correct setting is determined, the effect of the vertical difference (h) on the evaluation of the respective setting of the respective headlamp (44) is compensated, and the headlamp setting test is carried out while taking account of the compensated vertical difference (h).

14. A method in accordance with claim 13, **characterized in that** a plurality of values for vertical differences (h) are determined for different possible positions of the contact patches (34, 34', 38, 38') of a rear wheel (34") with respect to possible contact patches (32, 36) of a front wheel (32') and are stored in the data memory (68); and **in that** the respective position of the contact patch of the rear wheel (34") with respect to the contact patch of the front wheel (32') is used in the carrying out of the test of the headlamp setting to select the respective current value from the stored values and with the respective current value being taken into account for the required compensation.

15. A method in accordance with claim 13 or claim 14, **characterized in that** the monitor (60) is a pixel recording digital camera, in particular a CMOS camera, a CCD camera, or another electronic recording unit recording pixels of the image, with a reference marking (58) being associated with the pixels of the digital camera, the position of said reference marking (58) being compensated, in particular at least vertically displaced, in accordance with the respective vertical difference (h) or value stored in the data memory (68).

16. A method in accordance with any one of the claims 13 to 15, **characterized in that** the monitor (60) bears a reference marking (58) and is vertically displaceable in accordance with the respective vertical difference (h) stored in the data memory (68) and/or can be inclined about a horizontal axis (A), whereby the position of the reference marking (58) is movable in accordance with the respective vertical difference (h) or value and the test result does not falsify the setting of the headlamp (44).

## Revendications

1. Appareil de contrôle du réglage des phares (14) destiné à être utilisé sur un poste de contrôle du réglage des phares (10), comprenant une lentille (62) dirigeant une image du phare contrôlé (44) sur un moniteur (60), une mémoire de données (68) qui comprend des données correspondant à la topographie du poste de contrôle du réglage des phares (10) concerné, c'est-à-dire à la position X, Y, Z réelle du sol du poste de contrôle du réglage des phares (10), et qui mémorise donc la différence de hauteur (h) entre la surface de contact au sol (34, 34', 38, 38') d'une roue arrière (34"), disposée sur le côté du phare (44) respectif contrôlé, et la surface de contact au sol (32, 36) de la roue avant (32') correspondante, et présentant une possibilité de correction de la position de l'image sur le moniteur (60), prenant en compte la différence de hauteur (h) respective, ce qui permet de compenser l'effet de la différence de hauteur (h) sur l'évaluation du réglage respectif du phare respectif (44).

2. Appareil de contrôle du réglage des phares (14) selon la revendication 1, **caractérisé en ce que** le moniteur (60) est une caméra numérique enregistrant des pixels, en particulier une caméra CMOS, une caméra CCD ou une autre unité d'enregistrement électronique enregistrant des pixels de l'image.

3. Appareil de contrôle du réglage des phares (14) selon la revendication 2, **caractérisé en ce qu'**un repère de référence (58) peut être associé aux pixels de la caméra numérique, dont la position peut être compensée, en particulier être déplacée au moins verticalement, en fonction de la différence de hauteur (h) ou de la valeur respective stockée dans la mémoire de données (68).

4. Appareil de contrôle du réglage des phares (14) selon l'une des revendications précédentes,
**caractérisé en ce que** le moniteur (60) peut être déplacé verticalement et/ou incliné autour d'un axe horizontal (A) en fonction de la différence de hauteur (h) ou de la valeur respective stockée dans la mémoire de données (68), grâce à quoi la position du moniteur (60) peut être déplacée en fonction de la différence de hauteur (h) ou de la valeur respective, et le résultat du contrôle ne fausse pas le réglage du phare (44).

5. Appareil de contrôle du réglage des phares (14) selon la revendication 1, **caractérisé en ce que** le moniteur (60) porte un repère de référence (58) et peut être déplacé verticalement et/ou incliné autour d'un axe horizontal en fonction de la différence de hauteur (h) ou de la valeur respective stockée dans la mémoire de données (68), grâce à quoi la position du repère de référence (58) peut être déplacée en fonction de la différence de hauteur (h) ou de la valeur respective, et le résultat du contrôle ne fausse pas le réglage du phare.

6. Appareil de contrôle du réglage des phares (14) selon l'une des revendications précédentes,
**caractérisé en ce que** la mémoire de données (68) comprend des données en tant que valeurs de table correspondant à la différence de hauteur respective (h) entre des surfaces de contact au sol possibles (34, 34', 38, 38') d'une roue arrière (34") et des surfaces de contact au sol possibles (32, 36) d'une roue avant (32') sur le poste de contrôle du réglage des phares (10).

7. Appareil de contrôle du réglage des phares (14) selon la revendication 6 en combinaison avec un poste de contrôle du réglage des phares, **caractérisé en ce que** des repères (24, 26, 28, 30, 40) sont prévus sur le poste de contrôle du réglage des phares (10), dont les indications de position sont associées aux valeurs de table.

8. Appareil de contrôle du réglage des phares (14) selon la revendication 7, **caractérisé en ce que** l'appareil de contrôle du réglage des phares (14) comprend une possibilité d'entrée (66) des indications de position respectives correspondant à la position (H) d'au moins la roue arrière (34") du véhicule contrôlé (21).

9. Appareil de contrôle du réglage des phares (14) selon l'une des revendications précédentes,
**caractérisé en ce que** la mémoire de données (68) comprend des données pouvant être saisies par un dispositif de balayage qui balaye le poste de contrôle du réglage des phares (10).

10. Appareil de contrôle du réglage des phares (14) selon la revendication 9, **caractérisé en ce que** le dispositif de balayage comprend au moins un laser, un appareil de mesure à ultrasons, un appareil de mesure à radar ou un autre appareil de mesure de coordonnées.

11. Appareil de contrôle du réglage des phares (14) selon la revendication 7, dans lequel des repères (24, 26, 28, 30) sont prévus sur le poste de contrôle du réglage des phares (10), qui marquent les surfaces de contact au sol possibles (34, 34', 38, 38') d'une roue arrière (34") et les surfaces de contact au sol possibles (32, 36) d'une roue avant (32') sur le poste de contrôle du réglage des phares (10), dont les indications de position peuvent être associées à des différences de hauteur (h) entre les surfaces de contact au sol possibles d'une roue arrière et les surfaces de contact au sol possibles d'une roue avant.

12. Appareil de contrôle du réglage des phares (14) selon l'une des revendications précédentes 1 à 11,
**caractérisé en ce qu'**il est prévu une interface (76) permettant d'échanger des données entre l'appareil de contrôle du réglage des phares (14) et un phare (44), afin de corriger le réglage à l'aide d'un écart mesuré entre un réglage des phares et un réglage de consigne.

13. Procédé de contrôle du réglage des phares sur un poste de contrôle du réglage des phares (10) avec un appareil de contrôle du réglage des phares selon l'une des revendications précédentes 1 à 12,
**caractérisé en ce que** la topologie du poste de contrôle du réglage des phares (10) concerné, c'est-à-dire la position X, Y, Z réelle du sol du poste de contrôle du réglage des phares (10) est balayée par un dispositif de balayage et est mémorisée,
une différence de hauteur (h) entre la surface de contact au sol (34, 34') d'une roue arrière (34"), disposée sur le côté du phare (44) respectif contrôlé, et la surface de contact au sol (32, 36) de la roue avant (32') correspondante est déterminée à partir de la topologie mémorisée, et une valeur de correction de la position attendue de l'image sur le moniteur (60) en cas de réglage correct est déterminée, l'effet de la différence de hauteur (h) sur l'évaluation du réglage respectif du phare respectif (44) est compensé, et le contrôle du réglage des phares est mis en oeuvre en prenant en compte la différence de hauteur (h) compensée.

14. Procédé selon la revendication 13,
**caractérisé en ce qu'**une pluralité de valeurs de différences de hauteur (h) pour différentes positions possibles des surfaces de contact au sol (34, 34', 38, 38') d'une roue arrière (34") par rapport aux surfaces de contact au sol possibles (32, 36) d'une roue avant (32') sont déterminées et stockées dans une mémoire de données (68),
**en ce que**, lors de la mise en oeuvre du contrôle du réglage des phares, la position respective de la surface de contact au sol de la roue arrière (34") par rapport à la surface de contact au sol de la roue avant (32') est utilisée pour sélectionner la valeur respectivement valable parmi les valeurs mémorisées, la valeur respectivement valable étant prise en compte pour la compensation nécessaire.

15. Procédé selon la revendication 13 ou 14,
**caractérisé en ce que** le moniteur (60) est une caméra numérique enregistrant des pixels, en particulier une caméra CMOS, une caméra CCD ou une autre unité d'enregistrement électronique enregistrant des pixels de l'image, un repère de référence (58) étant associé aux pixels de la caméra numérique, dont la position est compensée, en particulier déplacée au moins verticalement, en fonction de la différence de hauteur (h) ou de la valeur respective stockée dans la mémoire de données (68).

16. Procédé selon l'une des revendications 13 à 15,
**caractérisé en ce que** le moniteur (60) porte un repère de référence (58) et peut être déplacé verticalement et/ou être incliné autour d'un axe horizontal (A) en fonction de la différence de hauteur (h) respective stockée dans la mémoire de données (68), grâce à quoi la position du repère de référence (58) peut être déplacée en fonction de la différence de hauteur (h) ou de la valeur respective, et le résultat du contrôle ne fausse pas le réglage du phare (44).
